# EUROPEAN PATENT APPLICATION

(11) **EP 4 794 232 A2**
(43) Date of publication of application: **19.08.2026**
(21) Application number: 26183381.8
(22) Date of filing: 06.02.2020
(51) Int. Cl.: H04L 1/08

(54) **REPETITION TRANSMISSION METHOD IN A COMMUNICATION SYSTEM**

(62) Document number(s) of the earlier application(s) in accordance with Art. 76 EPC: 20887602.9 / 4 101 256
(71) Applicant: ZTE Corporation, Shenzhen, Guangdong 518057 (CN)
(72) Inventor: HAN, Xianghui, Shenzhen, 518057 (CN); HAO, Peng, Shenzhen, 518057 (CN); LI, Yu Ngok, Shenzhen, 518057 (CN); DENG, Yiwei, Shenzhen, 518057 (CN); SHI, Jing, Shenzhen, 518057 (CN); KOU, Shuaihua, Shenzhen, 518057 (CN)
(74) Representative: Vossius & Partner Patentanwälte Rechtsanwälte mbB

(57) **Abstract**

Methods, systems, and devices related to related to digital wireless communication, and more specifically, to techniques related to an improved repetition transmission method. In one exemplary aspect, a method for wireless communication is disclosed. The method can include receiving, at a terminal configured to perform a number of transmission repetitions according to a rule, a first message from a network node, the first message including an indication to modify at least one transmission repetition of the number of transmission repetitions according to the rule. The method can also include modifying, by the terminal, the at least one transmission repetition of the number of transmission repetitions identified in the first message.

## Description

### TECHNICAL FIELD

This patent document is directed generally to wireless communications.

### BACKGROUND

Mobile communication technologies are moving the world toward an increasingly connected and networked society. The rapid growth of mobile communications and advances in technology have led to greater demand for capacity and connectivity. Other aspects, such as energy consumption, device cost, spectral efficiency, and latency are also important to meeting the needs of various communication scenarios. Various techniques, including new ways to provide higher quality of service, are being discussed.

### SUMMARY

This document discloses methods, systems, and devices related to digital wireless communication, and more specifically, to techniques related to an improved repetition transmission method.

In one exemplary aspect, a method for wireless communication is disclosed. The method includes receiving, at a terminal configured to perform a number of transmission repetitions according to a rule, a first message from a network node, the first message including an indication to modify at least one transmission repetition of the number of transmission repetitions according to the rule. The method also includes modifying, by the terminal, the at least one transmission repetition of the number of transmission repetitions identified in the first message.

In another exemplary aspect, a method for wireless communication is disclosed. The method includes receiving, at a network node, a transmission of a number of transmission repetitions from the terminal, the number of transmission repetitions configured to be performed according to a rule. The method also includes transmitting, by the network node, a first message to the terminal including an indication to modify at least one transmission repetition of the number of transmission repetitions according to the rule.

In another exemplary aspect, a wireless communications apparatus comprising a processor is disclosed. The processor is configured to implement a method described herein.

In yet another exemplary aspect, the various techniques described herein may be embodied as processor-executable code and stored on a computer-readable program medium.

Some embodiments may preferably implement the following solutions, written in a clause-format.
1. A solution for wireless communication, comprising: receiving, at a terminal configured to perform a number of transmission repetitions according to a rule, a first message from a network node, the first message including an indication to modify at least one transmission repetition of the number of transmission repetitions according to the rule, and modifying, by the terminal, the at least one transmission repetition of the number of transmission repetitions identified in the first message.
2. The solution of clause 1, wherein the transmission repetition is a physical uplink shared channel (PUSCH) transmission repetition or a physical uplink control channel (PUCCH) transmission repetition.
3. The solution of any of clauses 1 and 2, wherein said modifying the transmission repetition includes preventing transmission of the transmission repetition that occurs at a symbol after a time period that begins at an end of the first message.
4. The solution of any of clauses 1 and 2, wherein said modifying the transmission repetition includes preventing transmission of the transmission repetition that occurs at a beginning of a repetition after a time period that begins at an end of the first message.
5. The solution of any of clauses 1 and 2, wherein the first message indicates that the number of transmission repetitions equals 0.
6. The solution of clause 5, wherein the first message indicating that the number of transmission repetitions equals 0 is included in a radio resource control (RRC) message configured for the terminal.
7. The solution of clause 5, wherein the number of transmission repetitions that equals 0 is included in a predefined set of transmission repetition numbers.
8. The solution of clause 5, wherein the first message indicates that the number of transmission repetitions equaling 0 is included in downlink control information (DCI) of the first message.
9. The solution of clause 5, wherein the first message is jointly coded in a time domain resource allocation (TDRA) table, wherein the first message indicates a row of the TDRA table with the number of transmission repetitions equaling 0.
10. The solution of any of clauses 1 and 2, wherein the transmission repetition includes one of a dynamic grant PUSCH transmission or a configured grant PUSCH transmission.
11. The solution of any of clauses 1 and 2, wherein the first message includes an acknowledgement (ACK) feedback message for the transmission repetition, wherein the first message includes explicit ACK signaling that comprises sequence-based signaling.
12. The solution of any of clauses 1 and 2, wherein the first message includes DCI scheduling information that includes a new transport block (TB) with a Hybrid Automatic Repeat Request Identifier (HARQ-ID) that is the same as the transmission repetition.
13. The solution of clause 12, wherein the first message includes a first new data indicator (NDI) in the DCI scheduling information that is the same as a second NDI indicated in DCI scheduling in the PUSCH transmission repetition.
14. The solution of any of clause 12 and 13, wherein the terminal ignores at least one bit field of the first message other than at least one bit field from a HARQ process bit field, an NDI bit field, and a bit field indicating that the number of transmission repetitions is equal to 0.
15. The solution of any of clauses 1 and 2, wherein the first message indicates a modification to the number of transmission repetitions to the network node.
16. The solution of clause 15, wherein the modification to the number of transmission repetitions to the network node includes a number of remaining PUSCH or PUCCH transmission repetitions to the network node.
17. The solution of clause 15, further comprising: initializing, by the terminal, a redundancy version (RV) sequence responsive to determining that the first message indicates the modification to the number of transmission repetitions to the network node.
18. The solution of clause 15, further comprising: initializing, by the terminal, a frequency hopping position for modifying a frequency for PUSCH transmission repetitions responsive to determining that the first message indicates the modification to the number of transmission repetitions to the network node.
19. The solution of any of clauses 1 and 2, wherein the first message includes a gap between transmission repetitions that is included in an RRC message configured in the first message or dynamically indicated in DCI of the first message.
20. The solution of clause 19, wherein the gap between transmission repetitions is jointly coded with one or more bit fields in the DCI of the first message or the RRC message configured in the first message.
21. The solution of any of clauses 1 and 2, wherein the first message includes a gap between groups of transmission repetitions that is RRC configured in the first message or dynamically indicated in DCI of the first message.
22. The solution of clause 1, wherein the first message includes an orthogonal code or an orthogonal code index to the terminal.
23. The solution of clause 22, wherein the orthogonal code includes a length of the orthogonal code and is configured in a RRC message.
24. The solution of clause 22, wherein any of the orthogonal code and the index the orthogonal code is jointly coded in a TDRA table for any of PUSCH or PUCCH or a physical downlink shared channel (PDSCH).
25. The solution of clause 22, further comprising: transmitting, by the terminal, the transmission repetition to the network node at a time along a time domain according to the orthogonal code.
26. The solution of clause 25, wherein a number of transmission repetitions are transmitted by the terminal to the network node according to a RV for each transmission repetition, wherein the RV is configured by a RRC message or dynamically indicated in DCI.
27. The solution of clause 26, wherein the RV is the same for each repetitions using the same orthogonal code.
28. The solution of clause 1, wherein the first message includes an orthogonal code or an orthogonal code index to a group of repetitions, wherein each group has one or more repetitions.
29. The solution of clause 28, wherein the orthogonal code is the same or different among different groups.
30. The solution of clause 29, wherein an RV used for each repetition within one group is the same for each repetition within the one group.
31. A solution for wireless communication, comprising: receiving, at a network node, a transmission of a number of transmission repetitions from the terminal, the number of transmission repetitions configured to be performed according to a rule, and transmitting, by the network node, a first message to the terminal including an indication to modify at least one transmission repetition of the number of transmission repetitions according to the rule.
32. The solution of clause 31, wherein the transmission repetition includes a physical uplink shared channel (PUSCH) transmission to the network node or a physical uplink control channel (PUCCH) transmission.
33. The solution of any of clauses 31 and 32, wherein the first message indicates that the number of transmission repetitions equals 0.
34. The solution of any of clauses 31 and 32, wherein the first message includes an acknowledgement (ACK) feedback message for the transmission repetition, wherein the terminal is configured to determine that the network node has decoded the PUSCH transmission repetition by the terminal by inspecting the first message.
35. The solution of any of clauses 31 and 32, wherein the first message includes downlink control information (DCI) scheduling information that includes a new transport block (TB) with a Hybrid Automatic Repeat Request Identifier (HARQ-ID) that is the same as the transmission repetition.
36. The solution of any of clauses 31 and 32, wherein the first message indicates a modification to the number of transmission repetitions to the network node.
37. The solution of any of clauses 31 and 32, wherein the first message includes a gap between the number of transmission repetitions that is RRC configured in the first message or dynamically indicated in DCI of the first message.
38. The solution of any of clauses 31 and 32, wherein the number of transmission repetitions is jointly coded in a bit field in DCI or RRC signaling.
39. The solution of any of clauses 31 and 32, wherein the number of transmission repetitions is jointly coded in any of a downlink time domain resource allocation (TDRA) table and a modulation and coding scheme (MCS) table.
40. The solution of clause 31, further comprising: transmitting, by the network node, a set of orthogonal codes unique to each of a series of terminals to enable multiplexing between multiple terminals, wherein the set of orthogonal codes enable the series of terminals to send various transmission repetitions to the network node according to the orthogonal codes.
41. The solution of clause 40, wherein the set of orthogonal codes sent to each of the series of terminals include a redundancy version (RV) for each transmission repetition sent to the network node according to the orthogonal codes, wherein the RV is configured by an RRC message or dynamically indicated by a DCI.
42. The solution of clause 31, wherein the transmission repetition is a PUSCH transmission repetition that is defined by a data symbol.
43. The solution of clause 31, wherein the first message includes a mapping pattern of a resource element (RE) in a frequency domain assigned to the terminal.
44. An apparatus for wireless communication comprising a processor that is configured to carry out the solution of any of clauses 1 to 43.
45. A non-transitory computer readable medium having code stored thereon, the code when executed by a processor, causing the processor to implement a solution recited in any of clauses 1 to 43.

The details of one or more implementations are set forth in the accompanying attachments, the drawings, and the description below. Other features will be apparent from the description and drawings, and from the claims.

### BRIEF DESCRIPTION OF THE DRAWINGS

FIG. 1 is a block diagram of a first example bitfield for a number of initial repetitions and a hopping boundary.
FIG. 2 is a block diagram of a second example bitfield for a number of initial repetitions and a hopping boundary.
FIG. 3 is an example block diagram illustrating a termination/cancellation timeline.
FIG. 4 are example block diagrams of multiplexing orthogonal codes with multiple terminals.
FIG. 5 is an example block diagram depicting multiple UEs with a repetition number of 4.
FIG. 6 is an example block diagram of a repeated data symbol.
FIG. 7 is a block diagram of an example method for an improved repetition transmission method.
FIG. 8 shows an example of a wireless communication system where techniques in accordance with one or more embodiments of the present technology can be applied.
FIG. 9 is a block diagram representation of a portion of a hardware platform.

### DETAILED DESCRIPTION

Section headings are used in the present document for ease of understanding. As such, techniques described in one section may be combined with techniques described in other sections. Furthermore, while 5G terminology is used to illustrate some aspects, the disclosed technique may be embodied in wireless systems and devices that implement protocols other than 5G or 3GPP protocols.

The development of the new generation of wireless communication - 5G New Radio (NR) communication - is a part of a continuous mobile broadband evolution process to meet the requirements of increasing network demand. NR will provide greater throughput to allow more users connected at the same time. Other aspects, such as energy consumption, device cost, spectral efficiency, and latency are also important to meeting the needs of various communication scenarios.

Reliable coverage in a network can be a key factor when commercializing wireless communication networks because of its direct impact on service quality, as well as capital expenditures (CAPEX) and operating expenses (OPEX). When compared to previous systems, NR may be designed to operate at higher frequencies, such as 28GHz or 39GHz in FR2 (frequency range 2), for example.

Further, many locations are making more spectrums available on FR1 (frequency range 1), such as 3.5GHz, which is typically in higher frequencies than for previous systems. Due to these higher frequencies, wireless channels may be subject to higher path-loss, making it more challenging to maintain a sufficient quality of service that is at least equal to that of legacy systems.

In addition, the NR requirements relating to data rate for cell edge UEs (or "terminals") may be greater than that of previous system (e.g., an LTE system), which may indicate that a higher signal to noise ratio (SNR) is needed for cell edge UEs. The NR requirements may also indicate some enhancements on NR physical channel transmission to make a comparable cell coverage to other systems (e.g., an LTE system).

### System Overview

In one aspect, the present embodiments relate to an improved repetition transmission method. Particularly, a UE configured to perform a number of transmission repetitions according to a rule may receive a first message from a network node (e.g., a gNB). The first message can include an indication to modify at least one transmission repetition of the number of transmission repetitions according to the rule. For instance, the first message can include an indication to cancel one or more transmission repetitions. The UE can modify the at least one transmission repetition of the number of transmission repetitions identified in the first message.

### Early Termination for PUSCH Repetition

The present embodiments may relate to an improved repetition transmission method that can include early termination for a physical uplink shared channel (PUSCH) repetition. In many cases, PUSCH repetition is a straightforward way to enhance PUSCH coverage. For example, it can be assumed that the overall reliability for PUSCH is 0.9, and the reliability for each repetition is P. If inter-slot frequency hopping is enabled, the successful decoding probability for each repetition can be regarded as independent. Taking 4 repetitions for instance, 1-(1-P)^4=0.9, P= 0.4377. The probability of successful decoding based on the first 2 and 3 repetitions is 1-(1-P)^2 = 0.6838 and 1-(1-P)^3 = 0.8222 respectively. So, in this example, there could be some remaining unnecessary repetitions, which can be canceled to improve system efficiency and save UE power.

### Indicating Early Termination Signaling

In a first case, when a repetition number of K=0 is indicated, it can represent termination signaling. The number of repetitions K for PUSCH could be dynamically indicated or radio resource control (RRC) configured to the UE. For instance, K is jointly encoded in the time domain resource allocation (TDRA) table with other time domain scheduling information, and then using TDRA bit field in DCI to indicate one row including K factor to the UE. In many cases, K can only be 1, 2, 4 or 8. One way is to introduce K=0 for PUSCH repetition. K=0 can represent termination signaling. In other words, if a UE receives a indication with K=0, the UE can terminate the repetition.

In some embodiments, K=0 is indicated by RRC. In other embodiments, K=0 is configured in a set of repetition numbers by RRC or K=0 is predefined in a set of repetition numbers, and then downlink control information (DCI) can be used to indicate K=0. In other embodiments, K=0 is directly indicated by a DCI.

In some embodiments, K=0 is jointly coded in a TDRA table. If a base station (e.g., gNB) wants to cancel PUSCH repetition, gNB can indicate a row in the TDRA table with the repetition number of 0 to represent cancellation. gNB uses DCI or RRC to indicate the row in the TDRA table.

In some embodiments, if K=0 is indicated by a DCI, a Hybrid Automatic Repeat Request (HARQ) process ID indicated by the DCI can be the same as the initial PUSCH transmission. In other embodiments, if K=0 is indicated by a DCI, the New Data Indicator (NDI) indicated by the DCI can be the same as the NDI in the DCI scheduling initial PUSCH transmission. In other embodiments, if K=0 is indicated by a DCI, all the bit fields in the DCI can be the same as the DCI scheduling the initial PUSCH transmission. In some embodiments, if K=0 is indicated by a DCI, the UE ignores at least one bit field other than one of the following bit fields: a HARQ process bit field, an NDI and the bit field indicating K=0. For instance, the UE can ignore the frequency domain resource allocation bit field. In some embodiments, the UE uses one or more bit fields for validation of a termination DCI. For instance, the UE can use a frequency domain resource allocation bit filed for the validation of the termination DCI.

In some embodiments, if K=0 is indicated by a DCI, the DCI can schedule another PUSCH with a new transport block (TB). In some embodiments, the DCI scheduling the new TB has the same HARQ-ID with the PUSCH transmission to be canceled. The DCI scheduling of the new TB may include the same NDI bit field with the DCI scheduling the PUSCH transmission to be canceled.

The PUSCH repetition transmission may include a dynamic grant PUSCH or a configured grant PUSCH. The termination signaling for dynamic grant PUSCH may be the same as type 2 configured grant PUSCH. The termination signaling for dynamic grant PUSCH may be different with type 1 configured grant PUSCH.

In a second case, the termination signaling may include an ACK feedback for the PUSCH transmission. If a gNB indicates an ACK for the PUSCH repetition transmission, the UE may assume that the gNB has successfully decoded the gNB, and the UE can stop its transmission. Then, the termination signaling may include explicit ACK signaling, which can be indicated by DCI. In some embodiments, the explicit ACK signaling may be a sequence based signaling. For example, taking N bits ACK a, one of the 2^N sequences may be selected to transmit to represent one bit state out of all 2^N states respectively.

Generally, termination signaling may be indicated by DCI. In some embodiments, one or more termination bits are indicated for one PUSCH transmission or one HARQ process.

In a third case, the termination signaling may be a DCI scheduling in a new TB with the same HARQ-ID as the PUSCH transmission to be canceled. If a UE receives a DCI scheduling a new TB with the same HARQ-ID as an ongoing PUSCH transmission, the UE can cancel/stop the PUSCH transmission.

In some embodiments, at least the NDI indicated by the termination DCI is the same as the NDI in the DCI scheduling the PUSCH transmission to be canceled. In other embodiments, all the bit fields in the termination DCI may be the same as the DCI scheduling the PUSCH transmission to be canceled. In other embodiments, the UE ignores at least one or more bit fields other than one of the following bit field: HARQ process bit field, NDI and the bit field indicating K=0. For instance, the UE ignores the frequency domain resource allocation bit filed. In some embodiments, the UE uses one or more bit fields for validation of the termination DCI. For example, the UE can use a frequency domain resource allocation bit filed for the validation of the termination DCI.

In a fourth case, a gNB can change the number of repetitions for an ongoing PUSCH transmission.

More specifically, a gNB can reduce the number of repetitions for an ongoing PUSCH transmission or gNB can enlarge the number of repetitions for an ongoing PUSCH transmission. For example, the initial repetition number is 8, after 2 repetitions, gNB presumes that only 2 additional repetitions is sufficient. gNB can change the remaining repetition number to 2. Alternatively, the gNB can presume that 8 repetitions is not sufficient. The gNB can change the remaining repetition number to 8.

In some embodiments, gNB indicates the number of remaining repetitions. The number of repetitions may not include the previous transmitted or ongoing transmitting repetitions. In some embodiments, gNB indicates the total number of repetitions. The number of repetitions may include the previous transmitted or ongoing transmitting repetitions. In some embodiments, the number of repetitions is the total number of actual repetitions.

In some embodiments, the number of repetitions includes a repetition factor K = 0. In other embodiments, the features as described in the first case may apply to the fourth case.

In some embodiments, an RV sequence is initialized when the number of repetitions is changed or still cycling with previous repetitions. For instance, if the number of initial repetitions is 4, and the RV is 0,2,3,1. At a third repetition, the UE can receive the remaining repetition number is 4, then the RV is initialized at third or the next (the fourth repetition), i.e., the RV is 0,2,0,2,3,1,0 or 0,2,3,0,2,3,1. Alternatively, the RV can be still cycling with previous repetitions as 0,2,3,1,0,2,3.

In some embodiments, the frequency hopping position/boundary is initialized when the number of repetition is changed or kept as the same as previous repetitions or determined based on the total/remaining number of repetitions.

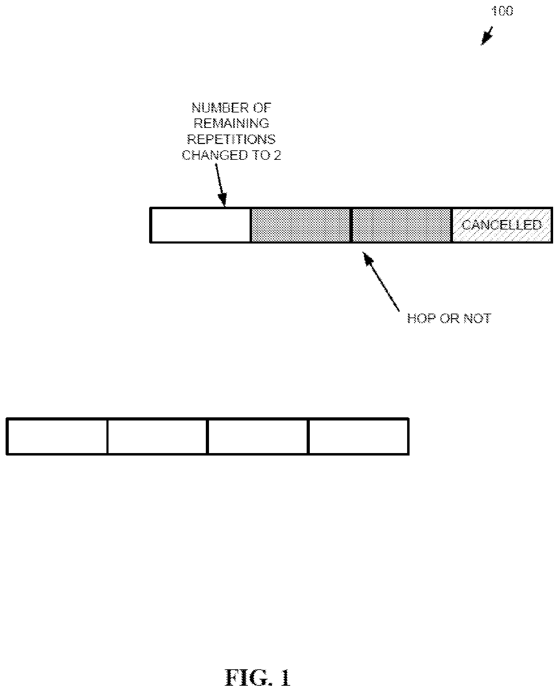

FIG. 1 is a block diagram of a first example bitfield 100 for a number of initial repetitions and a hopping boundary. As shown in FIG. 1, a number of initial repetitions may be 8, and a hopping boundary may be between the fourth and the fifth repetition. The UE may determine that the number of remaining repetitions is changed to 2. Accordingly, the frequency hopping position/boundary may be initialized and performed based on the remaining repetitions. Alternatively, the frequency hopping position/boundary can be determined based on the remaining 2 repetitions.

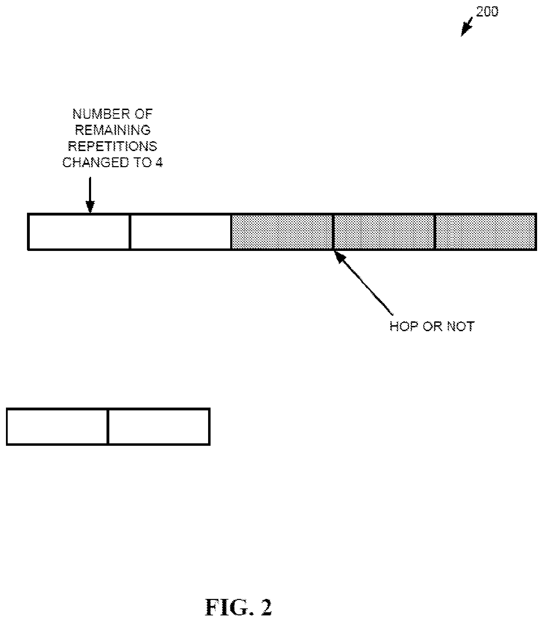

FIG. 2 is a block diagram of a second example bitfield 200 for a number of initial repetitions and a hopping boundary. As shown in FIG. 2, the UE may determine that the number of remaining repetitions is changed to 4. Accordingly, the frequency hopping position/boundary may be initialized and performed based on the remaining repetitions.

### Termination/Cancellation Timeline

When a UE receives the termination/cancellation indication, a timeline could be T_proc2 as an UL puncture indication. In some cases, one question is whether the termination takes effect directly after T_proc2 or from the beginning of the next repetition.

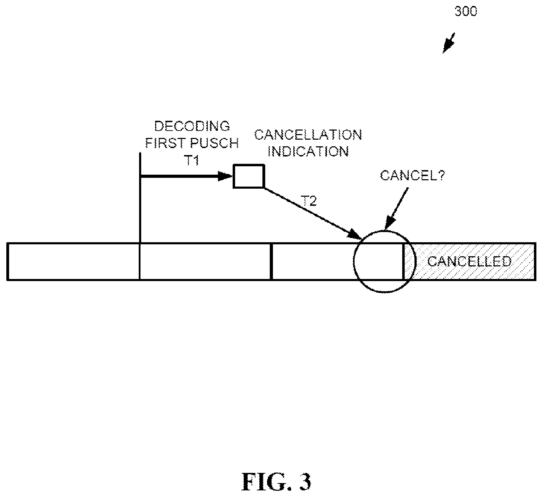

FIG. 3 is an example block diagram 300 illustrating a termination/cancellation timeline. As shown in FIG. 3, T1 may include a decoding timeline for the first repetition, and the gNB may send a cancellation indication at the beginning of the third repetition. The timeline to decode and perform the cancellation may be at time T2. Then, the UE may stop the transmission at the end of the third repetition or at the beginning of the fourth repetition.

In some embodiments, to avoid possible dropping of UCI on the third PUSCH repetition, the current repetition may not be cancelled and only the remaining repetitions are cancelled.

In some embodiments, when a UE receives a termination/cancellation indication, the UE cancels the PUSCH transmission from the symbol after a timeline of T from the end of the termination/cancellation indication. In some embodiments, when a UE receives a termination/cancellation indication, the UE cancels the from the beginning of the #(n+1) repetition or from the end of the #(n) repetition if the symbol after a timeline of T from the end of the termination/cancellation indication is within the #(n) repetition.

In some instances, a gap between repetitions may exist. Based on the analysis on cancellation indication, a timeline may be needed (e.g., T1+T2 shown in FIG. 3), to cancel the remaining transmission/repetitions. This could cause some unnecessary transmission (e.g., the second and third repetition in FIG. 3).

A gap between repetitions may be defined. The gap between different repetition may be the same. The gap may be RRC configured or dynamically indicated in DCI. In some embodiments, the gap is jointly coded with one or more bit fields in DCI or RRC signaling. For instance, the gap is jointly coded with TDRA field. The gap may be in a unit of symbols or slots or absolute time. In some embodiments, the starting slot or symbol of each repetition may be directly RRC configured or dynamically indicated in DCI.

One or more groups among all repetitions may be defined. Each group may have one or more repetitions, and the number of repetitions in each group may be the same or different. A gap between each group may be defined.

The gap between different groups may be the same. The gap may be RRC configured or dynamically indicated in DCI. In some embodiments, the gap is jointly coded with one or more bit fields in DCI or RRC signaling. The gap may be in a unit of symbols or slots or absolute time. The group configuration may be RRC configured or dynamically indicated in DCI. In some embodiments, the starting slot or symbol of each group is directly RRC configured or dynamically indicated in DCI.

The present embodiments may apply to PUSCH, PDSCH, PUCCH, PRACH, PDCCH, etc.

### Dynamic PUCCH Repetition

In many cases, the number of repetitions for long PUCCH format may be RRC configured. However, may be not adaptive enough for coverage enhancement. Accordingly, the present embodiments introduce a dynamic indication of PUCCH repetitions.

In some embodiments, one independent bit field may be used in a DCI to indicate the number of PUCCH repetitions. The DCI may be a UE-specific DL DCI or group common DCI.

In some embodiments, the number of PUCCH repetition is jointly coded with one or more bit filed in DCI or RRC signaling. In other embodiments, the number of PUCCH repetition is jointly coded with DL TDRA. The number of repetitions for PUCCH may include a repetition of K=0. In other embodiments, the DL TDRA includes the number of repetitions for both PDSCH and PUCCH. In other embodiments, the number of PUCCH repetition is jointly coded in the MCS table. In many cases, the MCS with lower coding rate needs (more) repetitions may further enhance the coverage. In other embodiments, the number of PUCCH repetition is jointly coded with TPC.

The early termination mentioned above for PUSCH repetition can also be applied to PUCCH repetition as described herein. The gap mentioned above for PUSCH repetition can also be also applied to PUCCH repetition as described herein. The PUCCH repetition can include long PUCCH repetition and/or short PUCCH repetition.

### CDM among different repetitions

The system efficiency may be decreased with the increase of the number of repetitions. Accordingly, the present embodiments provide enhancements to improve system efficiency in the case of repetitions.

Code division multiplexing among different PUSCH repetitions may be defined. For instance, this can include introducing an orthogonal cover code among different repetitions to enable inter-UE multiplexing.

In some embodiments, the code or code index is RRC configured. The code length may be RRC configured or determined by the number of repetitions.

In some embodiments, the code or code index is indicated in DCI. The code length may be indicated by DCI or determined by the number of repetitions.

In some embodiments, the code or code index is jointly coded with one or more bit field in DCI or RRC signaling. In some embodiments, the code or code index is jointly coded in the TDRA table for PUSCH or PDSCH.

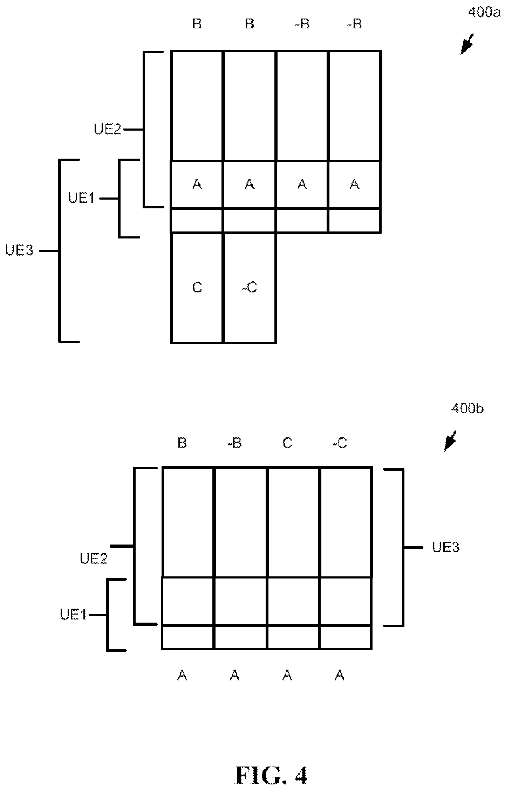

FIG. 4 are example block diagrams of multiplexing orthogonal codes with multiple terminals. As shown in FIG. 4, a first block diagram 400a may indicate that three UEs (e.g., UE1, UE2, UE3) are multiplexing with each other with different orthogonal codes. For example, the UE1 transmits 4 repetitions with a orthogonal code [1,1,1,1] in the time domain among different repetitions. The information transmitted on one repetition may be denoted as A. In this example, UE2 transmits 4 repetitions with a orthogonal code [1,1,-1,-1] in the time domain among different repetitions. The information transmitted on one repetition is denoted as B. Further, in this example, UE3 transmits 2 repetitions with a orthogonal code [1,-1] in the time domain among different repetitions. The information transmitted on one repetition is denoted as C. As seen in FIG. 4, the transmission from different UEs can be partially overlapped. A similar example is given in the second figure 400b of FIG. 4.

One or more groups among all repetitions may be defined. Each group may have one or more repetitions, and the number of repetitions in each group may be the same or different. An orthogonal code or code index may be indicated for each group. The orthogonal code may be the same or different among different groups. The RV used for each repetition within one group may be the same. The RV used for each repetition within different group may be different. The group configuration may be RRC configured or dynamically indicated in DCI. The RV configuration may be RRC configured or dynamically indicated in DCI or determined by a predefined rule.

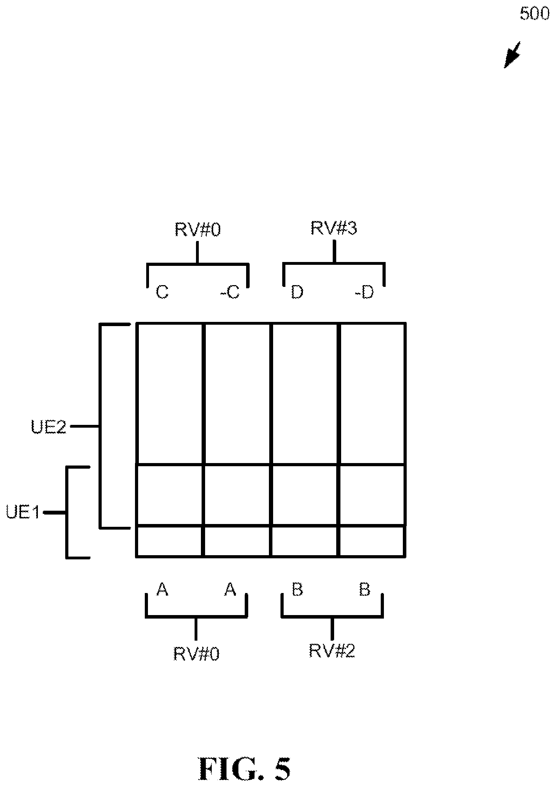

FIG. 5 is an example block diagram 500 depicting multiple UEs with a repetition number of 4. In FIG. 5, there may be two groups for each UE and two repetitions within each group. The orthogonal code for the first and second group for UE1 both may be [1,1], while the orthogonal code for the first and second group for UE1 both may be [1,-1]. The RV used for the first and second group for UE1 may be RV#0 and RV#2 respectively. The RV used for the first and second group for UE2 may be RV#0 and RV#3 respectively.

For a PUSCH repetition, a symbol-level repetition may be defined. Each data symbol may be repeated by a symbol-level repetition factor M. The repetition factor can be different from the PUSCH repetition number K. M may be a RRC configured or DCI indicated. In some embodiments, one or more groups among all data symbols for a PUSCH transmission can be defined. Each group may have one or more symbols, and the number of symbols in each group may be the same or different. An orthogonal code or code index may be indicated for each group. The orthogonal code may be the same or different among different groups. The RV used for each repetition within one group may be the same. The RV used for each repetition within different group may be the same or different. The group configuration may be RRC configured or dynamically indicated in DCI. The RV configuration may be RRC configured or dynamically indicated in DCI or determined by a predefined rule.

In some embodiments, a UE is assigned with an orthogonal code in the frequency domain by RRC or DCI. Different UEs may use different orthogonal codes. In some embodiments, a UE is assigned with a mapping pattern of RE in the frequency domain by RRC or DCI. Different UEs may use different mapping patterns. For instance, the mapping pattern is an interlaced mapping. Different UEs may use different interlaced REs in the frequency domain.

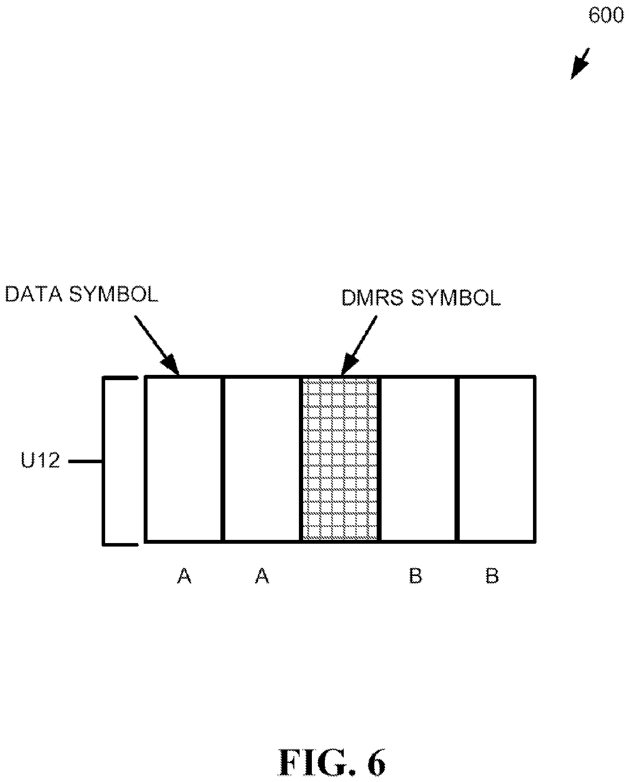

FIG. 6 is an example block diagram 600 of a repeated data symbol. As shown in FIG. 6, the data symbol may be repeated by a factor of 2. There are two groups and two symbols within each group. The information transmitted on one symbol may be denoted as A and B respectively for the first and second group. The orthogonal code for the first and second group may be [1,1] and [1,-1] respectively.

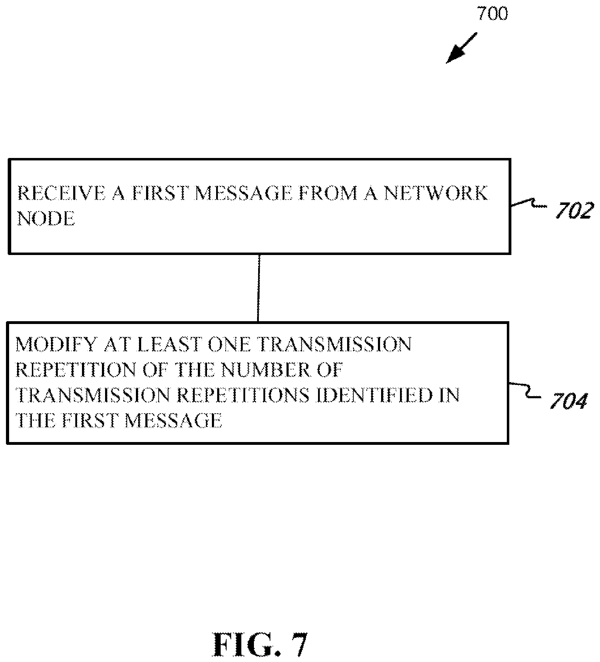

FIG. 7 is a block diagram of an example method for an improved repetition transmission method. The method may include receiving, at a terminal configured to perform a number of transmission repetitions according to a rule, a first message from a network node (block 702). The terminal may include a UE as described herein, and the network node may include a base station or gNB as described herein. The first message may include the cancellation indication as described herein. The first message may include an indication to modify at least one transmission repetition of the number of transmission repetitions according to the rule. The rule may include a configuration indicating when to send each transmission repetition. The rule (or "predefined rule") can indicate that the terminal and network node have a predetermined schedule of priority in transmission of data between the terminal and network node.

The method may also include modifying, by the terminal, the at least one transmission repetition of the number of transmission repetitions identified in the first message (block 704). Modifying the at least one transmission repetition can include cancelling one or more scheduled transmission repetition, for example.

In some embodiments, the transmission repetition is a physical uplink shared channel (PUSCH) transmission repetition or a physical uplink control channel (PUCCH) transmission repetition.

In some embodiments, modifying the transmission repetition includes preventing transmission of the transmission repetition that occurs at a symbol after a time period that begins at an end of the first message.

In some embodiments, modifying the transmission repetition includes preventing transmission of the transmission repetition that occurs at a beginning of a repetition after a time period that begins at an end of the first message.

In some embodiments, the first message indicates that the number of transmission repetitions equals 0.

In some embodiments, the first message indicating that the number of transmission repetitions equals 0 is included in a radio resource control (RRC) message configured for the terminal.

In some embodiments, the number of transmission repetitions that equals 0 is included in a predefined set of transmission repetition numbers.

In some embodiments, the first message indicates that the number of transmission repetitions equaling 0 is included in downlink control information (DCI) of the first message.

In some embodiments, the first message is jointly coded in a time domain resource allocation (TDRA) table, wherein the first message indicates a row of the TDRA table with the number of transmission repetitions equaling 0.

In some embodiments, the transmission repetition includes one of a dynamic grant PUSCH transmission or a configured grant PUSCH transmission.

In some embodiments, the first message includes an acknowledgement (ACK) feedback message for the transmission repetition, wherein the first message includes explicit ACK signaling that comprises sequence-based signaling.

In some embodiments, the first message includes DCI scheduling information that includes a new transport block (TB) with a Hybrid Automatic Repeat Request Identifier (HARQ-ID) that is the same as the transmission repetition.

In some embodiments, the first message includes a first new data indicator (NDI) in the DCI scheduling information that is the same as a second NDI indicated in DCI scheduling in the PUSCH transmission repetition.

In some embodiments, the terminal ignores at least one bit field of the first message other than at least one bit field from a HARQ process bit field, an NDI bit field, and a bit field indicating that the number of transmission repetitions is equal to 0.

In some embodiments, the first message indicates a modification to the number of transmission repetitions to the network node.

In some embodiments, the modification to the number of transmission repetitions to the network node includes a number of remaining PUSCH or PUCCH transmission repetitions to the network node.

In some embodiments, the method includes initializing, by the terminal, a redundancy version (RV) sequence responsive to determining that the first message indicates the modification to the number of transmission repetitions to the network node.

In some embodiments, the method includes initializing, by the terminal, a frequency hopping position for modifying a frequency for PUSCH transmission repetitions responsive to determining that the first message indicates the modification to the number of transmission repetitions to the network node.

In some embodiments, the first message includes a gap between transmission repetitions that is included in an RRC message configured in the first message or dynamically indicated in DCI of the first message.

In some embodiments, the gap between transmission repetitions is jointly coded with one or more bit fields in the DCI of the first message or the RRC message configured in the first message.

In some embodiments, the first message includes a gap between groups of transmission repetitions that is RRC configured in the first message or dynamically indicated in DCI of the first message.

In some embodiments, the first message includes an orthogonal code or an orthogonal code index to the terminal.

In some embodiments, the orthogonal code includes a length of the orthogonal code and is configured in a RRC message.

In some embodiments, any of the orthogonal code and the index the orthogonal code is jointly coded in a TDRA table for any of PUSCH or PUCCH or a physical downlink shared channel (PDSCH).

In some embodiments, the method includes transmitting, by the terminal, the transmission repetition to the network node at a time along a time domain according to the orthogonal code.

In some embodiments, a number of transmission repetitions are transmitted by the terminal to the network node according to a RV for each transmission repetition, wherein the RV is configured by a RRC message or dynamically indicated in DCI.

In some embodiments, the RV is the same for each repetitions using the same orthogonal code.

In some embodiments, the first message includes an orthogonal code or an orthogonal code index to a group of repetitions, wherein each group has one or more repetitions.

In some embodiments, the orthogonal code is the same or different among different groups.

In some embodiments, an RV used for each repetition within one group is the same for each repetition within the one group.

In another exemplary embodiment, a method for wireless communication includes receiving, at a network node, a transmission of a number of transmission repetitions from the terminal, the number of transmission repetitions configured to be performed according to a rule. The method also includes transmitting, by the network node, a first message to the terminal including an indication to modify at least one transmission repetition of the number of transmission repetitions according to the rule.

In some embodiments, the transmission repetition includes a physical uplink shared channel (PUSCH) transmission to the network node or a physical uplink control channel (PUCCH) transmission.

In some embodiments, the first message indicates that the number of transmission repetitions equals 0.

In some embodiments, the first message includes an acknowledgement (ACK) feedback message for the transmission repetition, wherein the terminal is configured to determine that the network node has decoded the PUSCH transmission repetition by the terminal by inspecting the first message.

In some embodiments, the first message includes downlink control information (DCI) scheduling information that includes a new transport block (TB) with a Hybrid Automatic Repeat Request Identifier (HARQ-ID) that is the same as the transmission repetition.

In some embodiments, the first message indicates a modification to the number of transmission repetitions to the network node.

In some embodiments, the first message includes a gap between the number of transmission repetitions that is RRC configured in the first message or dynamically indicated in DCI of the first message.

In some embodiments, the number of transmission repetitions is jointly coded in a bit field in DCI or RRC signaling.

In some embodiments, the number of transmission repetitions is jointly coded in any of a downlink time domain resource allocation (TDRA) table and a modulation and coding scheme (MCS) table.

In some embodiments, the method includes transmitting, by the network node, a set of orthogonal codes unique to each of a series of terminals to enable multiplexing between multiple terminals, wherein the set of orthogonal codes enable the series of terminals to send various transmission repetitions to the network node according to the orthogonal codes.

In some embodiments, the set of orthogonal codes sent to each of the series of terminals include a redundancy version (RV) for each transmission repetition sent to the network node according to the orthogonal codes, wherein the RV is configured by an RRC message or dynamically indicated by a DCI.

In some embodiments, the transmission repetition is a PUSCH transmission repetition that is defined by a data symbol.

In some embodiments, the first message includes a mapping pattern of a resource element (RE) in a frequency domain assigned to the terminal.

### Example Wireless System

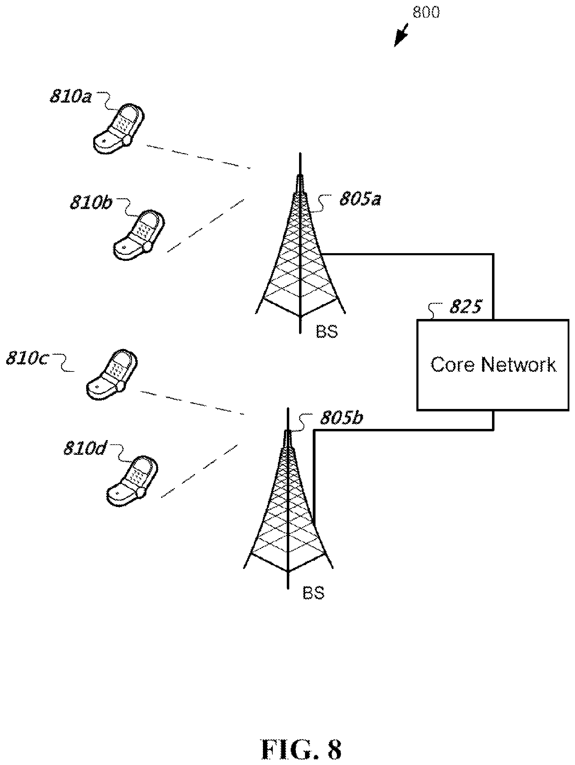

FIG. 8 shows an example of a wireless communication system where techniques in accordance with one or more embodiments of the present technology can be applied. A wireless communication system 800 can include one or more base stations (BSs) 805a, 805b, one or more wireless devices 810a, 810b, 810c, 810d, and a core network 825. A base station 805a, 805b can provide wireless service to wireless devices 810a, 810b, 810c and 810d in one or more wireless sectors. In some implementations, a base station 805a, 805b includes directional antennas to produce two or more directional beams to provide wireless coverage in different sectors.

The core network 825 can communicate with one or more base stations 805a, 805b. The core network 825 provides connectivity with other wireless communication systems and wired communication systems. The core network may include one or more service subscription databases to store information related to the subscribed wireless devices 810a, 810b, 810c, and 810d. A first base station 805a can provide wireless service based on a first radio access technology, whereas a second base station 805b can provide wireless service based on a second radio access technology. The base stations 805a and 805b may be co-located or may be separately installed in the field according to the deployment scenario. The wireless devices 810a, 810b, 810c, and 810d can support multiple different radio access technologies.

In some implementations, a wireless communication system can include multiple networks using different wireless technologies. A dual-mode or multi-mode wireless device includes two or more wireless technologies that could be used to connect to different wireless networks.

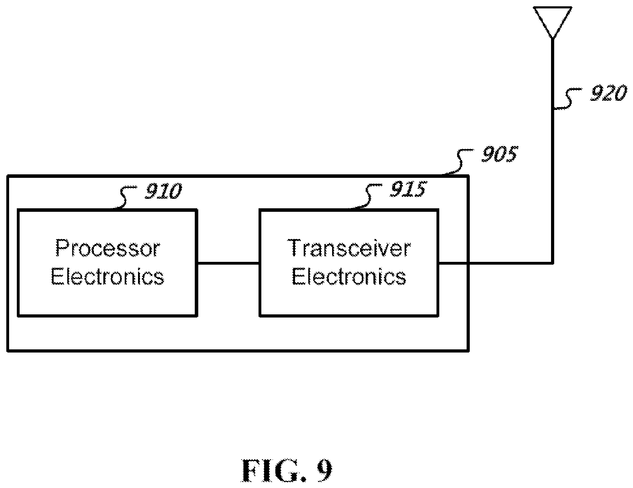

FIG. 9 is a block diagram representation of a portion of a hardware platform. A hardware platform 905 such as a network device or a base station or a wireless device (or UE) can include processor electronics 910 such as a microprocessor that implements one or more of the techniques presented in this document. The hardware platform 905 can include transceiver electronics 915 to send and/or receive wired or wireless signals over one or more communication interfaces such as antenna 920 or a wireline interface. The hardware platform 905 can implement other communication interfaces with defined protocols for transmitting and receiving data. The hardware platform 905 can include one or more memories (not explicitly shown) configured to store information such as data and/or instructions. In some implementations, the processor electronics 910 can include at least a portion of the transceiver electronics 915. In some embodiments, at least some of the disclosed techniques, modules or functions are implemented using the hardware platform 905.

### Conclusion

From the foregoing, it will be appreciated that specific embodiments of the presently disclosed technology have been described herein for purposes of illustration, but that various modifications may be made without deviating from the scope of the invention. Accordingly, the presently disclosed technology is not limited except as by the appended claims.

The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described, and other implementations, enhancements and variations can be made based on what is described and illustrated in this patent document.
The following items refer to preferred embodiments:
1. A method for wireless communication, comprising:
   receiving, at a terminal configured to perform a number of transmission repetitions according to a rule, a first message from a network node, the first message including an indication to modify at least one transmission repetition of the number of transmission repetitions according to the rule; and
   modifying, by the terminal, the at least one transmission repetition of the number of transmission repetitions identified in the first message.
2. The method of item 1, wherein the transmission repetition is a physical uplink shared channel (PUSCH) transmission repetition or a physical uplink control channel (PUCCH) transmission repetition.
3. The method of any of items 1 and 2, wherein said modifying the transmission repetition includes preventing transmission of the transmission repetition that occurs at a symbol after a time period that begins at an end of the first message.
4. The method of any of items 1 and 2, wherein said modifying the transmission repetition includes preventing transmission of the transmission repetition that occurs at a beginning of a repetition after a time period that begins at an end of the first message.
5. The method of any of items 1 and 2, wherein the first message indicates that the number of transmission repetitions equals 0.
6. The method of item 5, wherein the first message indicating that the number of transmission repetitions equals 0 is included in a radio resource control (RRC) message configured for the terminal.
7. The method of item 5, wherein the number of transmission repetitions that equals 0 is included in a predefined set of transmission repetition numbers.
8. The method of item 5, wherein the first message indicates that the number of transmission repetitions equaling 0 is included in downlink control information (DCI) of the first message.
9. The method of item 5, wherein the first message is jointly coded in a time domain resource allocation (TDRA) table, wherein the first message indicates a row of the TDRA table with the number of transmission repetitions equaling 0.
10. The method of any of items 1 and 2, wherein the transmission repetition includes one of a dynamic grant PUSCH transmission or a configured grant PUSCH transmission.
11. The method of any of items 1 and 2, wherein the first message includes an acknowledgement (ACK) feedback message for the transmission repetition, wherein the first message includes explicit ACK signaling that comprises sequence-based signaling.
12. The method of any of items 1 and 2, wherein the first message includes DCI scheduling information that includes a new transport block (TB) with a Hybrid Automatic Repeat Request Identifier (HARQ-ID) that is the same as the transmission repetition.
13. The method of item 12, wherein the first message includes a first new data indicator (NDI) in the DCI scheduling information that is the same as a second NDI indicated in DCI scheduling in the PUSCH transmission repetition.
14. The method of any of item 12 and 13, wherein the terminal ignores at least one bit field of the first message other than at least one bit field from a HARQ process bit field, an NDI bit field, and a bit field indicating that the number of transmission repetitions is equal to 0.
15. The method of any of items 1 and 2, wherein the first message indicates a modification to the number of transmission repetitions to the network node.
16. The method of item 15, wherein the modification to the number of transmission repetitions to the network node includes a number of remaining PUSCH or PUCCH transmission repetitions to the network node.
17. The method of item 15, further comprising:
   initializing, by the terminal, a redundancy version (RV) sequence responsive to determining that the first message indicates the modification to the number of transmission repetitions to the network node.
18. The method of item 15, further comprising:
   initializing, by the terminal, a frequency hopping position for modifying a frequency for PUSCH transmission repetitions responsive to determining that the first message indicates the modification to the number of transmission repetitions to the network node.
19. The method of any of items 1 and 2, wherein the first message includes a gap between transmission repetitions that is included in an RRC message configured in the first message or dynamically indicated in DCI of the first message.
20. The method of item 19, wherein the gap between transmission repetitions is jointly coded with one or more bit fields in the DCI of the first message or the RRC message configured in the first message.
21. The method of any of items 1 and 2, wherein the first message includes a gap between groups of transmission repetitions that is RRC configured in the first message or dynamically indicated in DCI of the first message.
22. The method of item 1, wherein the first message includes an orthogonal code or an orthogonal code index to the terminal.
23. The method of item 22, wherein the orthogonal code includes a length of the orthogonal code and is configured in a RRC message.
24. The method of item 22, wherein the orthogonal code or the orthogonal code index is jointly coded in a TDRA table for any of PUSCH or PUCCH or a physical downlink shared channel (PDSCH).
25. The method of item 22, further comprising:
   transmitting, by the terminal, the transmission repetition to the network node at a time along a time domain according to the orthogonal code.
26. The method of item 25, wherein a number of transmission repetitions are transmitted by the terminal to the network node according to a RV for each transmission repetition, wherein the RV is configured by a RRC message or dynamically indicated in DCI.
27. The method of item 26, wherein the RV is the same for each repetitions using the same orthogonal code.
28. The method of item 1, wherein the first message includes an orthogonal code or an orthogonal code index to a group of repetitions, wherein each group has one or more repetitions.
29. The method of item 28, wherein the orthogonal code is the same or different among different groups.
30. The method of item 29, wherein an RV used for each repetition within one group is the same for each repetition within the one group.
31. A method for wireless communication, comprising:
   receiving, at a network node, a transmission of a number of transmission repetitions from the terminal, the number of transmission repetitions configured to be performed according to a rule; and
   transmitting, by the network node, a first message to the terminal including an indication to modify at least one transmission repetition of the number of transmission repetitions according to the rule.
32. The method of item 31, wherein the transmission repetition includes a physical uplink shared channel (PUSCH) transmission to the network node or a physical uplink control channel (PUCCH) transmission.
33. The method of any of items 31 and 32, wherein the first message indicates that the number of transmission repetitions equals 0.
34. The method of any of items 31 and 32, wherein the first message includes an acknowledgement (ACK) feedback message for the transmission repetition, wherein the terminal is configured to determine that the network node has decoded the PUSCH transmission repetition by the terminal by inspecting the first message.
35. The method of any of items 31 and 32, wherein the first message includes downlink control information (DCI) scheduling information that includes a new transport block (TB) with a Hybrid Automatic Repeat Request Identifier (HARQ-ID) that is the same as the transmission repetition.
36. The method of any of items 31 and 32, wherein the first message indicates a modification to the number of transmission repetitions to the network node.
37. The method of any of items 31 and 32, wherein the first message includes a gap between the number of transmission repetitions that is RRC configured in the first message or dynamically indicated in DCI of the first message.
38. The method of any of items 31 and 32, wherein the number of transmission repetitions is jointly coded in a bit field in DCI or RRC signaling.
39. The method of any of items 31 and 32, wherein the number of transmission repetitions is jointly coded in any of a downlink time domain resource allocation (TDRA) table and a modulation and coding scheme (MCS) table.
40. The method of item 31, further comprising:
   transmitting, by the network node, a set of orthogonal codes unique to each of a series of terminals to enable multiplexing between multiple terminals, wherein the set of orthogonal codes enable the series of terminals to send various transmission repetitions to the network node according to the orthogonal codes.
41. The method of item 40, wherein the set of orthogonal codes sent to each of the series of terminals include a redundancy version (RV) for each transmission repetition sent to the network node according to the orthogonal codes, wherein the RV is configured by an RRC message or dynamically indicated by a DCI.
42. The method of item 31, wherein the transmission repetition is a PUSCH transmission repetition that is defined by a data symbol.
43. The method of item 31, wherein the first message includes a mapping pattern of a resource element (RE) in a frequency domain assigned to the terminal.
44. An apparatus for wireless communication comprising a processor that is configured to carry out the method of any of items 1 to 43.
45. A non-transitory computer readable medium having code stored thereon, the code when executed by a processor, causing the processor to implement a method recited in any of items 1 to 43.

## Claims

1. A method for wireless communication, comprising:
receiving, by a user device, a group configuration defining one or more groups among repetitions, each group in the one or more groups comprising one or more of the repetitions;
receiving a redundancy version, RV, configuration for the one or more of the repetitions in each of the one or more groups,
wherein an orthogonal code or a code index of the orthogonal code is indicated for each group and wherein the RV configuration specifies that a first RV is applied to each repetition within a first group and a second RV different from the first RV is applied to each repetition within a second group.

2. The method of claim 1, further comprising:
transmitting a plurality of uplink transmissions based on the RV configuration and by applying an orthogonal code to the one or more of the repetitions in each respective group.

3. The method of claim 1, wherein the orthogonal code is same among different groups or different among the different groups.

4. The method of claim 2, wherein the plurality of uplink transmissions includes a physical uplink shared channel, PUSCH, or a physical uplink control channel, PUCCH.

5. The method of claim 1, wherein the group configuration is RRC (Radio Resource Control, configured or indicated in a Downlink Control Information, DCI.

6. The method of claim 1, wherein the RV configuration is Radio Resource Control, RRC, configured or indicated in a Downlink Control Information, DCI, or determined by a predefined rule.

7. The method of claim 2, further comprising determining a frequency-domain orthogonal code based on an Radio Resource Control, RRC, signaling or a Downlink Control Information, DCI, and the plurality of uplink transmissions are transmitted by further applying the frequency-domain orthogonal code to each of the plurality of uplink transmissions.

8. A method for wireless communication, comprising:
transmitting, by a network node, a group configuration defining one or more groups among repetitions, each group in the one or more groups comprising one or more of the repetitions;
transmitting a redundancy version, RV, configuration for the one or more of the repetitions in each of the one or more groups,
wherein an orthogonal code or a code index of the orthogonal code is indicated for each group and wherein the RV configuration specifies that a first RV is applied to each repetition within a first group and a second RV different from the first RV is applied to each repetition within a second group.

9. The method of claim 8, further comprising:
receiving a plurality of uplink transmissions based on the RV configuration, wherein an orthogonal code is applied to the one or more of the repetitions in each respective group.

10. The method of claim 8, wherein the orthogonal code is same among different groups or different among the different groups.

11. The method of claim 9, wherein the plurality of uplink transmissions includes a physical uplink shared channel, PUSCH, or a physical uplink control channel, PUCCH.

12. The method of claim 8, wherein the group configuration is Radio Resource Control, RRC, configured or indicated in a Downlink Control Information, DCI.

13. The method of claim 8, wherein the RV configuration is Radio Resource Control, RRC, configured or indicated in a Downlink Control Information, DCI, or determined by a predefined rule.

14. The method of claim 9, wherein a frequency-domain orthogonal code is determined based on an Radio Resource Control, RRC, signaling or a Downlink Control Information, DCI, and the plurality of uplink transmissions are received by further applying the frequency-domain orthogonal code to each of the plurality of uplink transmissions.

15. A wireless communication apparatus comprising processor electronics and at least one memory coupled to the processor electronics and storing instructions that, when executed by the processor electronics, cause the wireless communication apparatus to implement a method recited in any of claims 1-14.
